(19)

Europäisches
Patentamt
European
Patent Office
Office européen
des brevets

(11) **EP 3 159 418 A1**

(12) **EUROPEAN PATENT APPLICATION**

(43) Date of publication:
26.04.2017 Bulletin 2017/17

(21) Application number: 16002207.5

(22) Date of filing: 13.10.2016

(51) Int Cl.:
$C21D\ 8/02$ (2006.01)     $C22C\ 38/00$ (2006.01)
$C22C\ 38/02$ (2006.01)     $C22C\ 38/04$ (2006.01)
$C22C\ 38/06$ (2006.01)     $C22C\ 38/08$ (2006.01)
$C22C\ 38/12$ (2006.01)     $C22C\ 38/14$ (2006.01)
$C22C\ 38/16$ (2006.01)     $C22C\ 38/20$ (2006.01)
$C22C\ 38/22$ (2006.01)     $C22C\ 38/24$ (2006.01)
$C22C\ 38/26$ (2006.01)     $C22C\ 38/28$ (2006.01)
$C22C\ 38/32$ (2006.01)     $C22C\ 38/40$ (2006.01)
$C22C\ 38/42$ (2006.01)     $C22C\ 38/44$ (2006.01)
$C22C\ 38/48$ (2006.01)     $C22C\ 38/50$ (2006.01)
$C22C\ 38/58$ (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 21.10.2015 JP 2015207581

(71) Applicant: Kabushiki Kaisha Kobe Seiko Sho
(Kobe Steel, Ltd.)
Kobe-shi, Hyogo 651-8585 (JP)

(72) Inventors:
• Nako, Hidenori
  Kobe-shi, Hyogo, 651-2271 (JP)
• Okazaki, Yoshitomi
  Kobe-shi, Hyogo, 651-2271 (JP)
• Kawamori, Makoto
  Kobe-shi, Hyogo, 651-2271 (JP)
• Yuse, Fumio
  Kobe-shi, Hyogo, 651-2271 (JP)

(74) Representative: Müller-Boré & Partner
Patentanwälte PartG mbB
Friedenheimer Brücke 21
80639 München (DE)

(54) **STEEL PLATE AND BONDED ASSEMBLY**

(57) Mainly provided is a steel plate having excellent HIC resistance. The steel plate includes, in its chemical composition, C of 0.008 to 0.08 mass percent, Si of 0.02 to 0.50 mass percent, Mn of 0.6 to 2.0 mass percent, P of greater than 0 to 0.014 mass percent, S of greater than 0 to 0.004 mass percent, Al of 0.010 to 0.050 mass percent, Nb of 0.002 to 0.035 mass percent, REM of 0.0002 to 0.0070 mass percent, Zr of 0.0003 to 0.01 mass percent, Ca of 0.0003 to 0.004 mass percent, Ti of 0.002 to 0.012 mass percent, N of greater than 0 to 0.0065 mass percent, and O of greater than 0 to 0.004 mass percent, with the remainder. The steel plate includes TiN-containing precipitates having an equivalent circle diameter of 60 nm or more in a sectional number density of $1.0 \times 10^5$ per square millimeter or more.

**Description**

The present invention relates to steel plates and bonded assemblies.

With increasing global energy demands, a variety of energy including renewable energy is more and more developed and going in practical use. In contrast, it is still important to safely and efficiently produce, transport, and store fossil fuels such as petroleum, natural gas, and coal so as to ensure energy, because the fossil fuels still occupy most of energy resources as in the past. The production and transportation of the fossil fuels essentially require facilities using steel materials for use in such energy production/transportation, where the steel materials have high functions and high safety. This is because an accident, if once happens in the production/transportation of the fossil fuels, may readily take severe damage.

One of the steel materials for energy production/transportation is a steel plate for line pipes. The steel plate is a material to form line pipes for use in transportation of petroleum and natural gas. The steel plate for line pipes requires not only strength, toughness, and other properties required for general structural components, but also resistance typically to petroleum and natural gas passing through the line pipes. In particular, petroleum, natural gas, and other fuels produced from oil wells and gas wells recently tend to have lower quality and to include larger amounts of contaminated $H_2S$. Accordingly, the steel plate for line pipes requires better sour resistance represented by HIC resistance and SSCC resistance. The HIC resistance refers to such a resistance as to restrain hydrogen induced cracking (HIC). The SSCC resistance refers to such a resistance as to restrain sulfide stress corrosion cracking (SSCC).

In particular, of the line pipes, a T-shaped cross weld (T-shaped cross welded portion) undergoes two complicated thermal hystereses of rapid heating and rapid cooling. Specifically, the T-shaped cross weld undergoes both seam welding and girth welding. The seam welding is a joint welding to shape the steel plate for line pipes into a pipe. The girth welding is a welding to join adjacent pipes with each other. The T-shaped cross weld readily has excessively high hardness in its heat affected zone (HAZ) and is thereby susceptible to SSCC. It is therefore important for the steel plate for line pipes to have better SSCC resistance in a portion that undergoes T-shaped cross welding, because the portion is particularly susceptible to SSCC.

The steel plate for line pipes also requires a smaller thickness so as to offer lower cost upon transportation and construction. For such a smaller thickness, the steel plate for line pipes requires higher strength. The steel plate, however, tends to have lower HIC resistance with increasing strength. The steel plate therefore requires not only higher strength, but also still better HIC resistance.

Japanese Unexamined Patent Application Publication (JP-A) No. Sho61(1986)-165207 proposes a method for producing a steel plate having excellent sour resistance. The method includes allowing a steel plate to have a uniform, fine bainitic phase in the thickness direction. This technique is intended to allow the steel plate to have better HIC resistance, or to have better SSCC resistance in a portion that undergoes T-shaped cross welding. According to the method for producing a steel plate, first, a steel having a specific chemical composition is heated up to a temperature of 1000°C to 1200°C, and subsequently subjected to rolling. The rolling is performed at a temperature of 850°C or lower to a rolling reduction of 60% or more, and at a finish temperature of equal to or higher than the $Ar_3$ transformation temperature. Next, the workpiece is cooled from the temperature of equal to or higher than the $Ar_3$ transformation temperature down to a temperature of 350°C to lower than 550°C at a cooling rate of 30°C/s or more and is then allowed to cool by natural cooling. The patent literature mentions that a steel plate can have satisfactory HIC resistance of the steel and still have high strength of American Petroleum Institute (API) Standard X70 level by reducing a block-shaped bainitic phase, which is believed to lower the HIC resistance, and by allowing a homogeneous upper bainite or acicular ferrite phase to grow.

JP-A No. Hei01(1989)-96329 proposes, as another conventional technique, a method for producing a steel for welded structures, where the steel has excellent resistance to sulfide stress corrosion cracking (SSCC) and has a tensile strength of 56 kgf/mm[2] or more. In the method for producing a steel for welded structures, first a slab having a specific chemical composition is once heated up to a temperature of 1100°C to 1250°C, subjected to hot rolling in a temperature range of 950°C or lower and in the recrystallization temperature range so as to ensure a cumulative rolling reduction of 40% or more of the finish thickness, where the rolling is finished at a temperature of equal to or higher than the $Ar_3$ transformation temperature. The workpiece is then subjected directly to quenching from the temperature equal to or higher than the $Ar_3$ transformation temperature, and subsequently subjected to tempering at a temperature equal to or lower than the An temperature. This patent literature mentions that the technique may achieve a high strength in terms of a tensile strength of 56 kgf/mm[2] or more by using precipitation strengthening of fine carbonitrides of niobium (Nb) and vanadium (V).

JP-A No. 2005-186162 proposes, as a yet another conventional technique, a high-toughness thick-wall welded steel tube having excellent sour resisting properties. The welded steel tube is obtained by shaping a base steel plate having a thickness of 25 to 35 mm into a tube, and welding a seam of the tube via double-side single-layer welding. In the welded steel tube, the base metal has a specific chemical composition, and the seam weld metal has a specific chemical composition. The patent literature describes a component system to restrain hardness increase which causes reduction in SSCC resistance in a T-shaped cross welded portion.

JP-A No. 2011-21263 proposes, as still another conventional technique, a steel plate having excellent toughness in the heat affected zone (HAZ). The steel plate has a specific chemical composition and includes titanium-containing nitrides having an equivalent circle diameter less than 0.05 $\mu$m in a number density of $5.0 \times 10^6$ per square millimeter or more, titanium-containing nitrides having an equivalent circle diameter of 0.05 to 1.0 $\mu$m in a number density of $10 \times 10^5$ per square millimeter or more, and titanium-containing nitrides having an equivalent circle diameter greater than 1.0 $\mu$m in a number density of 5 per square millimeter or less. This patent literature mentions that the steel plate has excellent toughness in the heat affected zone (HAZ) by controlling the microstructure utilizing the titanium-containing nitrides.

These patent literature, however, fails to describe a steel plate that has satisfactory HIC resistance and satisfactory SSCC resistance in a T-shaped cross welded portion both at high levels.

The present invention has been made under these circumstances and has a main object to provide a steel plate that has excellent HIC resistance. The present invention has another object to provide a steel plate that has excellent SSCC resistance in a T-shaped cross welded portion.

The inventors of the present invention revealed that SSCC resistance decreases when the hardness abruptly decreases with an increasing distance from a fusion line in a heat affected zone in a weld, in particular in a T-shaped cross weld, of a line pipe, where the fusion line is an interface between a weld metal and the heat affected zone in a base plate steel This is probably because the abrupt hardness change may readily cause extreme stress concentration. The abrupt hardness change in the heat affected zone in the weld occurs because hard martensite readily forms in a region adjacent to the fusion line, whereas soft ferrite readily forms in a region at some distance from the fusion line. Based on these, the inventors made investigations on restrainment af hard martensite formation in the region adjacent to the fusion line and on restrainment of soft ferrite formation in the region at some distance from the fusion line so as to reduce the hardness change in the heat affected zone in the weld. As a result, the inventors had following results. Specifically, the hard martensite phase in the region adjacent to the fusion line forms in a so-called coarse-grained heat affected zone, where the coarse-grained heat affected zone is a zone in which austenite grains coarsen via reverse transformation upon welding. The amount of the hard martensite phase can be reduced by allowing precipitates containing titanium nitride (TiN-containing precipitates) to disperse to thereby develop austenite grain pinning effects. In contrast, the soft furrite phase in the region at some distance from the fusion line farms in a so-called fine-grained heat affected zone, where the fine-grained heat affected zone is a zone in which fine austenite grains form via reverse transformation upon welding. The soft ferrite phase can be restrained from forming by intentionally reducing the TiN-containing precipitates having austenite grain pinning effects in the region at some distance from the fusion line, and causing prior austenite grains in the region adjacent to the fusion line to coarsen to some extent

Specifically, the present invention has been made to achieve the objects and provides a steel plate as follows. The steel plate includes, in its chemical composition, C in a content of 0.008 mass percent to 0.08 mass percent, Si in a content of 0.02 mass percent to 0.50 mass percent, Mn in a content af 0.6 mass percent to 2.0 mass percent, P in a content of greater than 0 mass percent to 0.014 mass percent., S in a content of greater than 0 mass percent to 0.004 mass percent, Al in a content of 0.010 mass percent to 0.050 mass percent, Nb in a content of 0.002 mass percent to 0.035 mass percent, at least one rare-earth metal in a content of 0.0002 mass percent to 0.0070 mass percent, Zr in a content of 0.0003 mass percent to 0.01 mass percent, Ca in a content of 0.0003 mass percent to 0.004 mass percent, Ti in a content of 0.002 mass percent to 0.012 mass percent, N in a content of greater than 0 <u>mass</u> percent to 0.0065 mass percent, and O in a content of greater than O mass percent to 0.004 mass percent, with the remainder being Fe and inevitable impurities. The steel plate includes TiN-containing precipitates having an equivalent circle diameter of greater than 20 nm to smaller than 60 nm in a sectional number density of $3.0 \times 10^5$ per square millimeter to $8.5 \times 10^5$ per square millimeter and includes TiN-containing precipitates having an equivalent circle diameter of 60 nm or more in a sectional number density of $10 \times 10^5$ per square millimeter or more.

The steel plate includes relatively small TiN-oontaining precipitates having an equivalent circle diameter of greater than 20 nm to smaller than 60 nm and relatively large TiN-containing precipitates having an equivalent circle diameter of 60 nm or more in sectional number densities in specific ranges. The region adjacent to the fusion line in the heat affected zone is exposed to a relatively high temperature upon welding. In this region upon welding, most of the relatively small TiN-containing precipitates dissolve and disappear, whereas the relatively large TiN-containing precipitates readily remain undissolved Both the undissolved, residual relatively large TiN-containing precipitates and part of the relatively small TiN-containing precipitates offer austenite grain pinning effects in the region adjacent to the fusion line. In contrast, the region at some distance from the fusion line is exposed to a not so high temperature upon welding as compared with the region adjacent to the fusion line. In this region, most of even the relatively small TiN-containing precipitates remain as undissolved. The steel plate includes the relatively small TiN-containing precipitates in a larger sectional number density as oompared with the relatively large TiN-containing precipitates. Accordingly, the relatively small TiN-oontaining precipitates predominately offer the austenite grain pinning effects in the region at some distance from the fusion line.

The steel plate can restrain hard martensite formation in the region adjacent to the fusion line in the heat affected zone, because the relatively small TiN-containing precipitates offer austenite grain pinning effects upon welding in the region adjacent to the fusion line. In contrast, the steel plate can restrain soft ferrite formation in the region at some distance from the fusion line, because the relatively small TiN-containing precipitates are controlled present in a sectional number density of the upper limit or less and to be not dispersed excessively, and the austenite grain pinning effects are thereby controlled or limited in the region at some distance from the fusion line. In addition, the steel plate can further restrain hard martensite phase formation in the region adjacent to the fusion line in the heat affected zone, because the relatively large TiN-containing precipitates offer austenite grain pinning effects upon welding in the region adjacent to the fusion line in the heat affected zone. As described above, the steel plate can restrain hard martensite formation in the region adjacent to the fusion line. This is because the steel plate includes the relatively small TiN-containing Precipitates and the relatively large TiN-containing precipitates in sectional number densities of the lower limits or more, and austenite grain pinning effects of the relatively small TiN-oontaining precipitates and of the relatively large TiN-containing precipitates are utilized in the region adjacent to the fusion line. In contrast, the steel plate can restrain austenite grain pinning effects and sufficiently restrain soft ferrite formation in the region at some distance from the fusion line in the heat affected zone. This is because the relatively small TiN-containing precipitates are controlled to be present in a sectional number density of the upper limit or less. The steel plate, as having these oonfigurations, can restrain hard martensite formation in the region adjacent to the fusion line and soft ferrite formation in the region at some distance from the fusion line, each in the heat affected zone. As a result, the steel plate can have better SSCC resistance in the T-shaped cross welded portion. In addition, the steel plate, as having the chemical composition, can have better HIC resistance and have still better SSCC resistance in the T-shaped cross welded portion.

The steel plate preferably meets a condition specified by Expression (1):

$$[C] \times [Nb] \times 10^5 \leq 200 \qquad (1)$$

where [C] and [Nb] are contents (in mass percent) respectively of C and Nb based on the total mass of the steel plate.

The steel plate, when meeting the condition specified by Expression (1), can reduce precipitates containing niobium carbide (NbC-containing precipitates), where the NbC-containing precipitates offer austenite grain pinning effects upon welding in the region at some distance from the fusion line in the heat affected zone. As a result, the steel plate can further restrain soft ferrite formation in the region at some distance from the fusion line and, by extension, can have still better SSCC resistance in the T-shaped cross welded portion.

The steel plate may further include at least one element selected from the group consisting of Ni in a content of 0.01 mass percent to 1.50 mass percent, Cu in a content of 0.01 mass percent to 1.50 mass percent, Cr in a content of 0.01 mass percent to 1.50 mass percent, Mo in a content of 0.01 mass percent to 1.50 mass percent, V in a content of 0.003 mass percent to 0.08 mass percent, B in a content of 0.0002 mass percent to 0.0025 mass percent, and Mg in a content of greater than 0 mass percent to 0.005 mass percent Cr is useful for higher strength, restrains soft ferrite formation in the T-shaped cross weld, and thereby offers still better SSCC resistance, Mg forms MgS with S, as finely dispersed particles, and allows the steel plate to have still better SSCC resistanoe. In addition, Ni, Cu, Mo, V, and B are useful for allowing the steel plate to have higher strength. The steel plate, when further containing at least one element selected from the group consisting of Ni, Cu, Cr, Mo, V, B, and Mg in the specific content, can have desired properties. For example, the steel plate may have still better SSCC resistance in the T-shaped cross weld and/or higher strength depending on the type of the element to be contained.

To achieve the objects, the present invention provides, in another embodiment, a bonded assembly. The bonded assembly includes the steel plate, and a weld metal that joins two ends of the steel plate, or the bonded assembly includes the steel plate, another steel plate, and a weld metal that joins the steel plate and the other steel plate with each other.

The bonded assembly is a bonded assembly including the steel plate, in which both ends of the steel plate are joined with each other via the weld metal, or the steel plate and another steel plate are joined with each other via the weld metal Specifically, the bonded assembly is a bonded assembly that includes the steel plate, both ends of which are bonded or joined with each other by welding, or that includes the steel plate and another steel plate joined with each other by welding. The steel plate has excellent HIC resistance as described above. Thus, the bonded assembly has excellent HIC resistance. In addition, the steel plate, upon welding, can restrain hard martensite formation in the region adjacent to the fusion line and soft ferrite formation in the region at some distance from the fusion line in the heat affected zone. The bonded assembly including the steel plate, both ends of which are joined by welding or which is joined with another steel plate by welding, has excellent SSCC resistance in the weld, in particular, excellent SSCC resistance in the T-shaped cross welded portion.

In the bonded assembly, TiN-containing precipitates in the heat affected zone preferably have a sectional number density that gradually increases toward a direction away from the fusion line. This sectional number density change of the TiN-oontaining precipitates may occur in the following manner When the steel plate is welded under appropriate temperature conditions, a portion is exposed to a higher temperature at a decreasing distance from the fusion line in the heat affected zone and promotes dissolving and disappearance of the TiN-containing precipitates to an appropriate extent Accordingly, the bonded assembly includes the TiN-containing precipitates in the heat affected zone in a sectional number density that gradually increases toward a direction away from the fusion line, namely, the bonded assembly includes the steel plate welded under appropriate temperature conditions. This more surely offers better SSCC resistance in the weld, in particular, better SSCC resistance in the T-shaped cross welded portion.

Advantageous effects obtained by representative embodiments of the present invention disclosed herein are as follows. Specifically, the present invention can provide, according to an embodiment, a steel plate and a bonded assembly, both of which have excellent HIC resistance. The present invention, according to another embodiment, allows the steel plate and the bonded assembly to have better SSCC resistance in the T-shaped cross welded portion.

The steel plate and the bonded assembly according to embodiments of the present invention will be illustrated below..

Steel Plate

The steel plate includes, in a chemical composition, C (carbon) in a content of 0.008 mass percent to 0.08 mass percent, Si (silicon) in a content of 0.02 mass percent to 0.50 <u>mass</u> percent, Mn (manganese) in a content of 0.6 mass percent to 2.0 mass percent, P (phosphorus) in a content of greater than 0 mass percent to 0.014 mass percent, S (sulfur) in a content of greater than 0 mass percent to 0.004 mass percent, Al (aluminum) in a content of 0.010 mass percent to 0.050 mass percent, Nb (niobium) in a content of 0.002 mass percent to 0.035 mass percent, at least one rare-earth metal in a content of 0.0002 mass percent to 0.0070 mass percent, Zr (zirconium) in a content of 0.0003 mass percent to 0.01 mass percent, Ca (calcium) in a content of 0.0003 mass percent to 0.004 mass percent, Ti (titanium) in a content of 0.002 mass percent to 0.012 mass percent, N (nitrogen) in a content of greater than 0 mass percent to 0.0065 mass percent, and O (oxygen) in a content of greater than 0 mass percent to 0.004 mass percent, with the remainder being Fe (iron) and inevitable impurities. The steel plate includes TiN-containing precipitates having an equivalent circle diameter of greater than 20 nm to smaller than 60 nm in a sectional number density of $3.0 \times 10^5$ per square millimeter to $8.5 \times 10^5$ per square millimeter and includes TiN-oontaining precipitates having an equivalent circle diameter of 60 nm or more in a sectional number density of $1.0 \times 10^5$ per square millimeter or more.

The lower limit of the average thickness of the steel plate is not limited, but typically 6 mm, preferably 8 mm, and more preferably 12 mm. In contrast, the upper limit of the average thickness of the steel plate is not limited, but typically 60 mm, preferably 50 mm, and more preferably 40 mm. The steel plate, if having an average thickness less than the lower limit, may have insufficient strength when processed typically into line pipes. In contrast, the steel plate, if having an average thickness greater than the upper limit, may hardly be processed typically into line pipes.

The elements in the chemical composition of the steel plate will be described below.

C (carbon)

Carbon (C) is necessary for the steel plate to ensure satisfactory strength. The lower limit of the carbon content is 0.008 mass percent, preferably 0.02 mass percent, and more preferably 0.03 mass percent, In contrast, the upper limit of the carbon content is 0.08 mass percent, preferably 0.07 mass percent, and more preferably 0.06 mass percent. The steel plate, if having a carbon content less than the lower limit, may have insufficient strength. In contrast, the steel plate, if having a carbon content greater than the upper limit, may undergo martensite-austenite constituent formation and may have lower HIC resistance, because the martensite-austenite constituents act as HIC origins. In addition, the steel plate in this case may have lower SSCC resistance in the T-shaped cross welded portion, because martensite has increased hardness upon welding in the region adjacent to the fusion line in the heat effected zone.

Si (silicon)

Silicon (Si) is necessary for deoxidation of the steel plate. The lower limit of the Si content is 0.02 mass percent, preferably 0.04 mass percent, and more preferably 0.06 mass percent In contrast, the upper limit of the Si content is 0.50 mass percent, preferably 0.45 mass percent, and more preferably 0.35 mass percent The steel plate, if having a Si content less than the lower limit, may undergo insufficient deoxidation. In contrast, the steel plate, if having a Si content greater than the upper limit, may undergo martensite-austenite constituent formation and may have lower HIC resistance, because the martensite-austenibe constituents act as HIC origins (cause HIC).

Mn (manganese)

Manganese (Mn) is necessary for the steel plate to surely have certain strength. The lower limit of the Mn content is 0.6 mass percent, preferably 0.8 mass percent, and more preferably 1.0 mass percent In contrast, the upper limit of the Mn content is 2.0 mass percent, preferably 1.9 mass percent, and more preferably 1.8 mass percent, The steel plate, if having a Mn content less than the lower limit, may have insufficient strength. In contrast, the steel plate, if having a Mn content greater than the upper limit, may have lower HIC resistance, because Mn is combined with S to form MnS.

P (phosphorus)

Phosphorus (P) is inevitably contained in the steel plate and causes the steel plate to have lower HIC resistance and lower SSCC resistance. The phosphorus content is greater than 0 mass percent The phosphorus content is preferably minimized, but it is industrially difficult to control the content to 0 mass percent In contrast, the upper limit of the phosphorus content is 0.014 mass percent preferably 0.012 mass percent, and more preferably 0.010 mass percent The steel plate, if having a phosphorus content greater than the upper limit, may have lower HIC resistance and lower SSCC resistance in the T-shaped cross welded portion.

S (sulfur)

Sulfur (S) is inevitably contained in the steel plate and causes the steel plate to have lower HIC resistance, because sulfur is combined with Mn to form MnS. The sulfur content is greater than 0 mass percent The sulfur content is preferably minimized, but it is industrially difficult to control the content to 0 mass percent In contrast, the upper limit of the sulfur content is 0.004 mass percent preferably 0.003 mass percent, more preferably 0.0025 mass percent, and furthermore preferably 0.002 mass percent The steel plate, if having a sulfur content greater than the upper limit may have lower HIC resistance.

Al (aluminum)

Aluminum (Al) is necessary for deoxidation of the steel plate. The lower limit of the Al content is 0.010 mass percent preferably 0.020 mass percent and more preferably 0.025 mass percent In contrast the upper limit of the Al content is 0.050 mass percent preferably 0.045 mass percent, and more preferably 0.040 mass percent. The steel plate, if having an Al content less than the lower limit, may more readily undergo formation of titanium oxides, and this may impede the control of the equivalent circle diameter and sectional number density of TiN-containing precipitates within the predetermined ranges. In contrast, the steel plate, if having an Al content greater than the upper limit, may include aluminum oxide clusters, which act as HIC origins.

Nb (niobium)

Niobium (Nb) is necessary for the steel plate to surely have certain strength. The lower limit of the Nb content is 0.002 mass percent, preferably 0.005 mass percent, and more preferably 0.010 mass percent In contrast, the upper limit of the Nb content is 0.035 mass percent, preferably 0.033 mass percent, and more preferably 0.030 mass percent. The steel plate, if having a Nb content less than the lower limit, may have insufficient strength. In contrast, the steel plate, if having a Nb content greater than the upper limit, may more readily undergo formation of hard martensite upon welding in the region adjacent to the fusion line in the heat affected zone and may have lower SSCC resistance in the T-shaped cross welded portion.

Rare-Earth Metals

Rare-earth metals are necessary for deoxidation of the steel plate. The lower limit of the rare-earth metal content is 0.0002 mass percent, preferably 0.0005 mass percent, and more preferably 0.0010 mass percent In contrast, the upper limit of the rare-earth metal content is 0.0070 mass percent, preferably 0.0060 mass percent, more preferably 0.0055 mass percent, and furthermore preferably 0.0050 mass percent The steel plate, if having a rare-earth metal content less than the lower limit, may undergo insufficient deoxidation and more readily undergo formation of titanium oxides. This may impede the control of the equivalent circle diameter and the sectional number density of TiN-containing precipitates within the predetermined ranges. In contrast, the steel plate, if having a rare-earth metal content greater than the upper limit, may have lower SSCC resistance in the T-shaped cross welded portion, because solute rare-earth metals are segregated at grain boundaries and reduce the grain boundary strength. As used herein the term "rare-earth metal" refers to and includes fifteen lanthanoid elements from atomic number 57 La (lanthanum) to atomic number 71 Lu (lutetium); as well as Sc (scandium) and Y (yttrium).

Zr (zirconium)

Zirconium (Zr) is necessary for deoxidation of the steel plate. The lower limit of the Zr content is 0.0003 mass percent, preferably 0.0005 mass percent, and more preferably 0.0010 mass percent. In contrast, the upper limit of the Zr content is 0.01 mass percent, preferably 0.007 mass percent, and more preferably 0.005 mass percent. The steel plate, if having a Zr content less than the lower limit, may undergo insufficient deoxidation and may more readily undergo formation of titanium oxides. This may impede the control of the equivalent circle diameter and the sectional number density of TiN-containing precipitates within the predetermined ranges. In contrast, the steel plate, if having a Zr content greater than the upper limit, may have lower HIC resistance, because solute Zr increases in the steel melting step, and the solute Zr forms so as to surround oxides and sulfides in the casting step in the production of the steel plate.

Ca (calcium)

Calcium (Ca) forms CaS to fix sulfur, thereby reduces the amount of MnS, and, as a result, allows the steel plate to have better HIC resistance. The lower limit of the Ca content is 0.0003 mass percent, preferably 0.0005 mass percent, and more preferably 0.0010 mass percent. In contrast, the upper limit of the Ca content is 0.004 mass percent, preferably 0.0035 mass percent, and more preferably 0.0032 mass percent. The steel plate, if having a Ca content less than the lower limit, may have lower HIC resistance. In contrast, the steel plate, if having a Ca content greater than the upper limit, may have lower HIC resistance, because of the aggregation of excessively formed CaS.

Ti (titanium)

Titanium (Ti), together with nitrogen (N), precipitates as TiN-containing precipitates and allows the steel plate to have better SSCC resistance in the T-shaped cross welded portion. The lower limit of the Ti content is 0.002 mass percent, preferably 0.004 mass percent, and furthermore preferably 0.005 mass percent. In contrast, the upper limit of the Ti content is 0.012 mass percent, preferably 0.010 mass percent, more preferably 0.009 mass percent, and furthermore preferably 0.008 mass percent. The steel plate, if having a Ti content less than the lower limit, may hardly control the equivalent circle diameter and the sectional number density of TiN-containing precipitates within the predetermined ranges. In contrast, the steel plate, if having a Ti content greater than the upper limit, may have lower SSCC resistance in the T-shaped cross welded portion. This is because the TiN-containing precipitates are excessively stabilized to cause excessive austenite grain pinning effects in the region at some distance from the fusion line in the heat affected zone upon welding of the steel plate, and this accelerates soft ferrite formation.

N (nitrogen)

Nitrogen (N), together with Ti, precipitates as TiN-containing precipitates and allows the steel plate to have better SSCC resistance in the T-shaped cross welded portion. The nitrogen content is greater than 0 mass percent. The lower limit of the nitrogen content is 0.0020 mass percent, and more preferably 0.0025 mass percent, and furthermore preferably 0.0030 mass percent In contrast, the upper limit of the nitrogen content is 0.0065 mass percent, preferably 0.0060 mass percent, and more preferably 0.0055 mass percent The steel plate, if having a nitrogen content less than the lower limit, may hardly control the equivalent circle diameter and the sectional number density of TiN-containing precipitates within the predetermined ranges. In contrast, the steel plate, if having a nitrogen content greater than the upper limit, may have lower SSCC resistance in the T-shaped cross welded portion, because nitrides are segregated at grain boundaries of the steel plate and cause the steel plate to have lower grain boundary strength.

O (oxygen)

Oxygen (O) is inevitably contained in the steel plate, forms inclusions such as coarse oxides, and accelerates HIC with the inclusions as cracking origins. The oxygen content is greater than 0 mass percent The lower limit of the oxygen content is preferably 0.0002 mass percent. and more preferably 0.0008 mass percent In contrast, the upper limit of the oxygen content is 0.004 mass percent, preferably 0.003 mass percent, and more preferably 0.002 mass percent The steel plate, if having an oxygen content less than the lower limit, may fail to have effectively improved HIC resistance appropriate to increase in its production cost. In contrast, the steel plate, if having an oxygen content greater than the upper limit, may have lower HIC resistance, because the inclusions such as coarse oxides may cause and accelerate HIC.
The steel plate preferably further includes, in addition to the elements in the chemical composition, at least one element selected from the group consisting of Ni(nickel) in a content of 0.01 mass percent to 1.50 mass percent. Cu (copper) in a content of 0.01 mass percent to 1.50 mass percent, Cr (chromium) in a content of 0.01 mass percent to 1.50 mass percent, Mo (molybdenum) in a content of 0.01 mass percent to 1.50 mass percent V (vanadium) in a content of 0.003 mass percent to 0.08 mass percent, B (boron) in a content of 0.0002 mass percent to 0.0025 mass percent, and Mg (magnesium) in a content of greater than 0 mass percent to 0.005 mass percent

Ni(nickel)

Nickel (Ni) contributes to higher strength of the steel plate. The lower limit of the Ni content is preferably 0.01 mass percent, more preferably 0.05 mass percent, and furthermore preferably 0.10 mass percent In contrast, the upper limit of the Ni content is preferably 1.50 mass percent, more preferably 1.00 mass percent, and furthermore preferably 0.50 mass percent The steel plate, if having a Ni content less than the lower limit, may have insufficient strength. In contrast, the steel plate, if having a Ni content greater than the upper limit, may have lower SSCC resistance in the T-shaped cross welded portion, because hard martensite may increase in the region adjacent to the fusion line in the heat affected zone upon welding of the steel plate.

Cu (copper)

Copper (Cu) contributes to higher strength of the steel plate. The lower limit of the Cu content is preferably 0.01 mass percent, more preferably 0.05 mass percent, and furthermore preferable 0.10 mass percent In contrast, the upper limit of the Ni content is preferably 1.50 mass percent, more preferably 1.00 mass percent and furthermore preferably 0.50 mass percent The steel plate, if having a Cu content less than the lower limit, may have insufficient strength. In contrast, the steel plate, if having a Cu content greater than the upper limit, may have lower SSCC resistance in the T-shaped cross welded portion, because hard martensite may increase in the region adjacent to the fusion line in the heat affected zone upon welding of the steel plate.

Cr (chromium)

Chromium (Cr) contributes to higher strength of the steel plate. The lower limit of the Cr content is preferably 0.01 mass percent, more preferably 0.05 mass percent and furthermore preferably 0.10 mass percent In contrast, the upper limit of the Cr content is preferably 1.50 mass percent more preferably 1.00 mass percent, and furthermore preferably 0.50 mass percent The steel plate, if having a Cr content less than the lower limit, may have insufficient strength. In contrast, the steel plate, if having a Cr content greater than the upper limit, may have lower SSCC resistance in the T-shaped cross welded portion, because hard martensite may increase in the region adjacent to the fusion line in the heat affected zone upon welding of the steel plate.

Mo (molybdenum)

Molybdenum (Mo) contributes to higher strength of the steel plate. The lower limit of the Mo content is preferably 0.01 mass percent more preferably 0.05 mass percent and furthermore preferably 0.10 mass percent In contrast, the upper limit of the Mo content is preferably 1.50 mass percent, more preferably 1.00 mass percent, and furthermore preferably 0.50 mass percent. The steel plate, if having a Mo content less than the lower limit may have insufficient strength. In contrast, the steel plate, if having a Mo content greater than the upper limit, may have lower SSCC resistance in the T-shaped cross welded portion, because hard martensite may increase in the region adjacent to the fusion line in the heat affected zone upon welding of the steel plate.

V (vanadium)

Vanadium (V) contributes to higher strength of the steel plate. The lower limit of the vanadium content is preferably 0.003 mass percent, more preferably 0.005 mass percent, and furthermore preferably 0.010 mass percent. In contrast, the upper limit of the vanadium content is preferably 0.08 mass percent, more preferably 0.07 mass percent, and furthermore preferably 0.05 mass percent. The steel plate, if having a vanadium content less than the lower limit, may have insufficient strength. In contrast, the steel plate, if having a vanadium content greater than the upper limit, may have lower SSCC resistance in the T-shaped cross welded portion, because hard martensite may increase in the region adjacent to the fusion line in the heat affected zone upon welding of the steel plate.

B (boron)

Boron (B) contributes to higher strength of the steel plate. The lower limit of the boron content is preferably 0.0002 mass percent, more preferably 0.0005 mass percent, and furthermore preferably 0.0010 mass percent. In contrast, the upper limit of the boron content is preferably 0.0025 mass percent, and more preferably 0.020 mass percent The steel plate, if having a boron content less than the lower limit, may have insufficient strength. In contrast, the steel plate, if having a boron content greater than the upper limit, may have lower SSCC resistance in the T-shaped cross welded portion, because hard martensite may increase in the region adjacent to the fusion line in the heat affected zone upon welding of the steel plate.

Mg(magnesium)

Magnesium (Mg) contributes to still better SSCC resistance of the steel plate in the T-shaped cross welded portion, because Mg forms MgS (magnesium sulfide) with S, and the sulfide finely disperses. The Mg content is preferably greater than 0 mass percent The lower limit of the Mg content is preferably 0.0005 mass percent, and more preferably 0.0010 mass percent In contrast, the upper limit of the Mg content is preferably 0.005 mass percent, more preferably 0.004 mass percent, and furthermore preferably 0.003 mass percent, The steel plate, if having a Mg content less than the lower limit, may have lower SSCC resistance in the T-shaped cross welded portion. In contrast, the steel plate, if having a Mg content greater than the upper limit, may fail to have effectively improved SSCC resistance in the T-shaped cross welded portion appropriate to increase in its production cost.

Remainder

In addition to the elements, the steel plate contains Fe (iron) and inevitable impurities as the remainder. Non-limiting examples of the inevitable impurities include Sn (tin), As (arsenic), and Pb (lead).
The steel plate preferably meets a condition specified by Expression (1), in which [C] and [Nb] are contents (in mass percent) respectively of C and Nb. The steel plate, when meeting the condition specified by Expression (1), may have still better SSCC resistance in the T-shaped cross welded portion. The steel plate, when meeting the condition (configuration), offers the effect because as fellows. Specifically, NbC-containing precipitates formed of C and Nb offer austenite grain pinning effects and accelerate soft ferrite furmation in the region at some distance from the fusion line upon welding of the steel plate, although the effects of the NbC-containing precipitates are lower as compared with the TiN-containing precipitates. Accordingly, when the steel plate meets the condition specified by Expression (1), the amount of undissolved, remained NbC-containing precipitates decreases to restrain soft ferrite formation in the region at some distance from the fusion line in the heat affected zone upon welding. This allows the steel plate to have still better SSCC resistance upon T-shaped cross welding. Expression (1) is expressed as follows:

$$[C] \times [Nb] \times 10^5 \leq 200 \qquad (1)$$

The upper limit of the left-hand value of Expression (1) is preferably 200 as above, more preferably 195, furthermore preferably 190, particularly preferably 185, still more preferably 180, and most preferably 175. In contrast, the lower limit of the left-hand value of Expression (1) is not limited, but is preferably 1, and more preferably 10. If the left-hand value of Expression (1) is greater than the upper limit, a larger amount of NbC-containing precipitates may remain as undissolved in the region at some distance from the fusion line in the heat affected zone upon welding of the steel plate. The NbC-containing precipitates may offer austenite grain pinning effects to accelerate soft ferrite formation, and this may cause the steel plate to have lower SSCC resistance upon T-shaped cross welding. In contrast, if the left-hand value of Expression (1) is less than the lower limit, the steel plate may have insufficient strength due to insufficient Nb content and/or may hardly achieve the control of the equivalent circle diameter and the sectional number density of TiN-containing precipitates within the predetermined ranges, due to insufficient nitrogen content

TIN-containing precipitates

The steel plate contains both relatively small TiN-containing precipitates having an equivalent circle diameter of greater than 20 nm to smaller than 60 nm, and relatively large TiN-containing precipitates having an equivalent circle diameter of 60 nm or more. Upon welding of the steel plate, the relatively small TiN-containing precipitates offer austenite grain pinning effects to restrain hard martensite formation in the region adjacent to the fusion line in the heat affected zone, and offer austenite grain pinning effects to accelerate soft ferrite formation in the region at some distance from the fusion line. Also upon welding of the steel plate, the relatively large TiN-containing precipitates offer austenite grain pinning effects to restrain hard martensite formation in the region adjacent to the fusion line in the heat affected zone.

The lower limit of the sectional number density of the TiN-containing precipitates having an equivalent circle diameter of greater than 20 nm to smaller than 60 nm in the steel plate is $3.0\times10^5$ per square millimeter, preferably $3.5\times10^5$ per square millimeter, and more preferably $40\times10^5$ per square millimeter. In contrast, the upper limit of the sectional number density of the TiN-containing precipitates is $8.5\times10^5$ per square millimeter, preferably $8.0\times10^5$ per square millimeter, and more preferably $7.5\times10^5$ per square millimeter. The TiN-containing precipitates, if present in a sectional number density less than the lower limit, may foil to sufficiently offer austenite grain pinning effects in the region adjacent to the fusion line in the heat affected zone upon welding of the steel plate. This may cause the steel plate to have lower SSCC resistance in the T-shaped cross welded portion, because hard martensite phase formation may be insufficiently restrained. In contrast, the TiN-containing precipitates, if present in a sectional number density greater than the upper limit, may offer excessive austenite grain pinning effects in the region at some distance from the fusion line in the heat affected zone upon welding of the steel plate. This may cause the steel plate to have lower SSCC resistance in the T-shaped cross welded portion, because soft ferrite formation may be accelerated.

The lower limit of the sectional number density of the TiN-containing precipitates having an equivalent circle diameter of 60 nm or more in the steel plate is $1.0\times10^5$ per square millimeter, preferably $12\times10^5$ per square millimeter, and more preferably $1.5\times10^5$ per square millimeter. In contrast, the upper limit of the sectional number density of the TiN-containing precipitates is not limited, but typically $5.0\times10^5$ per square millimeter, preferably $3.0\times10^5$ per square millimeter, and more preferably $2.7\times10^6$ per square millimeter. The TiN-containing precipitates, if present in a sectional number density less than the lower limit, may fail to sufficiently offer austenite grain pinning effects and fail to restrain hard martensite phase formation in the region adjacent to the fusion line in the heat affected zone upon welding of the steel plate. This may cause the steel plate to have lower SSCC resistance in the T-shaped cross welded portion. In contrast, the TiN-containing precipitates, if present in a sectional number density greater than the upper limit, may impede the production of the steel plate.

As used herein the "sectional number density" of the TiN-containing precipitates having an equivalent circle diameter of greater than 20 nm to smaller than 60 nm, and the "sectional number density" of the TiN-containing precipitates having an equivalent circle diameter of 60 nm or more are each a value as measured in the following manner. First, any portion of the steel plate is cut to give a cut section. The cut section is observed with an electron microscope such as a transmission electron microscope (TEM). In the observation, precipitates containing titanium (Ti) are distinguished typically by energy dispersive X-ray spectrometer (EDX) and are defined as TiN-containing precipitates. Next, the areas of the TiN-containing precipitates in the observation view field are measured by image analysis and converted into equivalent circle diameters. The numbers of TiN-containing precipitates having an equivalent circle diameter of greater than 20 nm to smaller than 60 nm, and of TiN-containing precipitates having an equivalent circle diameter of 60 nm or more are counted, converted into numbers per square millimeter, and these are defined each as the "sectional number density". Particles having an equivalent circle diameter of 20 nm or less offer insufficient reliability in EDX and are excluded from the analysis.

Applications

The steel plate has excellent HIC resistance. The steel plate also has excellent SSCC resistance in the T-shaped cross welded portion. Consequently, the steel plate is advantageously usable as a steel material for energy production/transportation, which is a material for facilities for use in production and transportation of fossil fuels such as petroleum, coal, and natural gas. In particular, the steel plate is advantageously usable as a steel plate for line pipes, which is a material for line pipes for use in transportation of petroleum and natural gas.

Steel Plate Production Method

A non-limiting example of the method for producing the steel plate is a method including a casting step and a hot rolling step. In the coasting step, a molten steel is cast into an ingot In the hot rolling step, the ingot is subjected to hot rolling. The steps will be illustrated below.

Casting Step

In this step, a molten steel having the chemical composition is cast typically into a slab to give an ingot. The molten steel having the chemical composition may be prepared by employing conventionally known procedures alone or in combination as appropriate. The procedures are exemplified by, but are not limited to, desulfurization treatment, deoxidation treatment, and addition of respective elements. This step may include a coding treatment at a temperature of 1450°C to 1500°C. The lower limit of the cooling time in the temperature range is not limited, but typically 200 seconds.

In contrast, upper limit of the cooling time in the temperature range is preferably 300 seconds, and more preferably 280 seconds. Cooling in the temperature range, if performed for a time longer than the upper limit, may cause coarse TiN-containing precipitates to readily form. This may impede control of the equivalent circle diameter and the sectional number density of TiN-containing precipitates within the predetermined ranges. This step may also include, in addition to the cooling treatment in the temperature range, a cooling treatment at lower than 1450°C and/or a cooling treatment at 1500°C or higher.

Hot Rolling Step

In this step, the ingot obtained from the casting step is subjected to hot rolling to give a steel plate. The heating of the ingot in hot rolling may be performed at a temperature of typically 850°C to 1200°C. The lower limit of the ingot heating time is not limited, but typically 0.5 hour. In contrast, the upper limit of the heating time is preferably 4 hours, and more preferably 3.2 hours. The heating, if performed for a time longer than the upper limit, may cause coarse TiN-containing precipitates to readily form. This may impede the control of the equivalent circle diameter and the sectional number density of TiN-containing precipitates within the predetermined ranges.

The lower limit of the rolling reduction of the ingot between before and after this step is preferably 0.5, more preferably 0.6, and furthermore preferably 0.8, where the rolling reduction is specified by Expression (2). In contrast, the upper limit of the rolling reduction is not limited, but typically 0.9. The hot rolling, if performed to a rolling reduction less than the lower limit, may give an insufficient amount of strain during rolling and may cause TiN-containing precipitates that are formed by strain-induced precipitation to be reduced in amount. This may impede the control of the equivalent circle diameter and the sectional number density of TiN-containing precipitates within the predetermined ranges. Expression (2) is expressed as follows:

$$\text{Rolling reduction} = [(\text{Average thickness before rolling}) - (\text{Average thickness after rolling})]/(\text{Average thickness before rolling}) \qquad (2)$$

The lower limit of the number of rolling passes in this step is generally 1, preferably 3, and more preferably 7. In contrast, the upper limit of the number of rolling passes is preferably 16, more preferably 15, and furthermore preferably 12. The rolling, if performed in a pass number less than the lower limit, may hardly control the rolling reduction within the predetermined range. In contrast, the rolling, if performed in a pass number greater than the upper limit, should be performed at lower rolling reductions in individual passes in order to control the rolling reduction within the predetermined range. This may reduce the amount of TiN-containing precipitates, which are formed via strain-induced precipitation during rolling, and may impede the control of the equivalent circle diameter and the sectional number density of TiN-containing precipitates within the predetermined ranges.

The lower limit of the finish rolling temperature in this step is preferably 790°C, and more preferably 820°C. In contrast, the upper limit of the finish rolling temperature is typically 1000°C. The rolling, if performed at a finish rolling temperature lower than the lower limit, may introduce a larger amount of dislocations into the steel plate to cause fine TiN-containing precipitates to be formed excessively, where the fine TiN-containing precipitates employ such dislocations as diffusion paths. This may impede the control of the equivalent circle diameter and the sectional number density of TiN-containing precipitates within the predetermined ranges.

Bonded Assembly

The bonded assembly includes the steel plate and a weld metal that joins two ends of the steel plate with each other, or the bonded assembly includes the steel plate, another steel plate, and a weld metal that joins the steel plate with the other steel plate. The bonded assembly is a bonded assembly including the steel plate and a weld metal, in which two ends of the steel plate are joined via the weld metal, or a bonded assembly including the steel plate, another steel plate, and a weld metal, in which the steel plate and the other steel plate are joined with each other via the weld metal. Specifically, the bonded assembly is a bonded assembly in which both ends of the steel plate, or the steel plate and another steel plate, are joined with each other by welding. Assume that the bonded assembly has been welded under appropriate temperature conditions. In this case, upon the welding, a portion is exposed to a higher temperature with a decreasing distance from the fusion line in the heat affected zone, and in such a portion at a high temperature, TiN-containing precipitates are dissolved and decreased. The bonded assembly therefore includes TiN-containing precipitates in a sectional number density that gradually increases with an increasing distance from the fusion line in the heat affected zone. In the bonded assembly, the relatively small TiN-containing precipitates contained in the steel plate offer austenite grain pinning effects upon welding and restrain hard martensite formation in the region adjacent to the fusion line in the heat affected zone. In the bonded assembly, the relatively small TiN-containing precipitates contained in the steel plate are present in a sectional number density controlled to be equal to or less than the upper limit and are restrained from excessive dispersing. This restrains austenite grain pinning effects in the region at some distance from the fusion line and restrains soft ferrite formation. In addition in the bonded assembly, the relatively large TiN-containing precipitates contained in the steel plate offer austenite grain pinning effects and still further restrain hard martensite phase formation upon welding in the region adjacent to the fusion line in the heat affected zone. As described above, the bonded assembly less undergoes hard martensite formation in the region adjacent to the fusion line in the heat affected zone and less undergoes soft ferrite formation in the region at some distance from the fusion line. Thus, the bonded assembly has excellent SSCC resistance in welded portions, in particular, excellent SSCC resistance in the T-shaped cross welded portion. In addition, the bonded assembly has excellent HIC resistance, because two ends of the steel plate, or the steel plate and another steel plate, are joined with each other by welding.

Non-limiting examples of the bonded assembly include steel tubes and pipelines (line pipes). The steel tubes are each obtained by shaping the steel plate into a pipe, and bonding joint portions with each other by joint welding, namely, by seam welding. The pipelines are each obtained by bonding (joining) ends of two or more pieces of the steel tube with each other by girth welding.

Examples

The present invention will be illustrated in further detail with reference to several examples below. It should be noted, however, that the examples are by no means intended to limit the scope of the present invention.

Steel Plate Production

Molten steels having chemical compositions given in Table 1 were prepared by melting using a 150-kg vacuum induction furnace, and the molten steels were cast to give slabs. The slabs were subjected to hot rolling and yielded steel plates of No. 1 to No.19, each having an average thickness of 25 mm. The heating temperature in the hot rolling was set to 1100°C. Principal conditions in the steel plate production process, excluding the heating temperature in the hot rolling, are given in Table 2. The term "REM" in Table 1 refers to at least one rare-earth metal. In Table 2, "t1 (sec)" represents the time during which a cooling treatment at a temperature in the range of 1450°C to 1500°C is performed in the casting; and "t2(hr)" represents the heating time at 1100°C in the hot rolling. The "rolling reduction" represents the rolling reduction of the ingot between before and after the hot rolling and is specified by Expression (2):

$$\text{Rolling reduction} = [(\text{Average thickness before rolling}) - (\text{Average thickness after rolling})]/(\text{Average thickness before rolling}) \qquad (2)$$

[Table 1]

| Number | Category | C | Si | Mn | P | S | Al | Nb | REM | Zr | Ca | Ti | N | O | Mg | Ni | Cu | Cr | Mo | V | B | $[C]\times[Nb]\times10^5$ |
|---|---|---|---|---|---|---|---|---|---|---|---|---|---|---|---|---|---|---|---|---|---|---|
| 1 | Example | 0.07 | 0.25 | 1.53 | 0.007 | 0.0008 | 0.032 | 0.029 | 0.0022 | 0.0026 | 0.0020 | 0.007 | 0.0041 | 0.0020 | - | - | - | - | - | - | - | 203 |
| 2 | Example | 0.01 | 0.46 | 1.22 | 0.008 | 0.0012 | 0.015 | 0.025 | 0.0022 | 0.0024 | 0.0025 | 0.007 | 0.0033 | 0.0011 | - | - | - | - | - | - | - | 25 |
| 3 | Example | 0.05 | 0.08 | 1.95 | 0.012 | 0.0008 | 0.041 | 0.004 | 0.0062 | 0.0012 | 0.0015 | 0.010 | 0.0051 | 0.0028 | - | - | - | - | - | - | - | 20 |
| 4 | Example | 0.06 | 0.30 | 1.00 | 0.007 | 0.0007 | 0.029 | 0.030 | 0.0030 | 0.0020 | 0.0014 | 0.007 | 0.0026 | 0.0013 | - | 0.14 | 0.15 | 0.21 | - | - | - | 174 |
| 5 | Example | 0.03 | 0.16 | 1.54 | 0.007 | 0.0010 | 0.018 | 0.018 | 0.0031 | 0.0010 | 0.0015 | 0.005 | 0.0008 | 0.0015 | - | - | - | 0.40 | 0.12 | - | - | 58 |
| 6 | Example | 0.06 | 0.30 | 1.00 | 0.007 | 0.0008 | 0.022 | 0.032 | 0.0031 | 0.0011 | 0.0015 | 0.006 | 0.0037 | 0.0016 | - | 0.24 | 0.24 | 0.20 | - | - | - | 192 |
| 7 | Example | 0.03 | 0.16 | 1.57 | 0.007 | 0.0006 | 0.019 | 0.018 | 0.0031 | 0.0011 | 0.0015 | 0.006 | 0.0036 | 0.0016 | - | 0.25 | 0.26 | 0.40 | 0.05 | - | - | 54 |
| 8 | Example | 0.05 | 0.20 | 1.84 | 0.005 | 0.0005 | 0.032 | 0.033 | 0.0014 | 0.0044 | 0.0022 | 0.009 | 0.0045 | 0.0015 | - | 0.22 | 0.25 | - | 0.12 | 0.020 | - | 165 |
| 9 | Example | 0.05 | 0.30 | 1.51 | 0.007 | 0.0032 | 0.026 | 0.034 | 0.0006 | 0.0005 | 0.0015 | 0.007 | 0.0022 | 0.0019 | 0.002 | - | - | 0.95 | 0.44 | 0.041 | - | 170 |
| 10 | Example | 0.07 | 0.31 | 1.55 | 0.007 | 0.0008 | 0.035 | 0.021 | 0.0024 | 0.0072 | 0.0036 | 0.007 | 0.0062 | 0.0021 | - | 1.21 | 0.88 | - | 0.71 | - | - | 147 |
| 11 | Example | 0.03 | 0.15 | 1.44 | 0.007 | 0.0007 | 0.035 | 0.033 | 0.0025 | 0.0013 | 0.0006 | 0.003 | 0.0036 | 0.0016 | - | - | - | - | - | - | 0.0018 | 99 |
| 12 | Comparative Example | 0.06 | 0.30 | 1.02 | 0.007 | 0.0005 | 0.029 | 0.030 | 0.0030 | 0.0020 | 0.0013 | 0.001 | 0.0025 | 0.0028 | - | 0.14 | 0.15 | 0.21 | - | - | - | 171 |
| 13 | Comparative Example | 0.06 | 0.30 | 1.01 | 0.007 | 0.0005 | 0.029 | 0.030 | 0.0030 | 0.0020 | 0.0014 | 0.013 | 0.0069 | 0.0019 | - | 0.14 | 0.15 | 0.21 | - | - | - | 168 |
| 14 | Comparative Example | 0.06 | 0.31 | 1.05 | 0.007 | 0.0008 | 0.011 | 0.030 | 0.0029 | 0.0016 | 0.0016 | 0.007 | 0.0040 | 0.0015 | - | 0.24 | 0.24 | 0.20 | - | - | - | 180 |
| 15 | Comparative Example | 0.06 | 0.31 | 1.43 | 0.007 | 0.0010 | 0.013 | 0.022 | 0.0016 | 0.0019 | 0.0021 | 0.007 | 0.0044 | 0.0016 | - | 0.24 | - | 0.22 | - | - | - | 132 |
| 16 | Comparative Example | 0.06 | 0.15 | 1.66 | 0.011 | 0.0010 | 0.039 | 0.011 | 0.0040 | 0.0032 | 0.0022 | 0.009 | 0.0049 | 0.0021 | - | - | - | - | - | - | - | 66 |
| 17 | Comparative Example | 0.06 | 0.40 | 0.55 | 0.018 | 0.0048 | 0.008 | 0.028 | 0.0043 | 0.0023 | 0.0002 | 0.006 | 0.0042 | 0.0035 | - | 0.14 | 0.15 | 0.21 | - | - | - | 168 |
| 18 | Comparative Example | 0.09 | 0.35 | 1.45 | 0.007 | 0.0014 | 0.033 | 0.015 | 0.0088 | 0.0030 | 0.0021 | 0.007 | 0.0039 | 0.0023 | - | - | - | - | - | - | - | 135 |
| 19 | Comparative Example | 0.06 | 0.09 | 1.55 | 0.011 | 0.0008 | 0.032 | 0.015 | 0.0021 | 0.0015 | 0.0013 | 0.010 | 0.0066 | 0.0019 | - | - | - | - | - | - | - | 90 |

Measurement of TiN-Containing Precipitates Sectional Number Density

The prepared steel plates were subjected to measurements of sectional number densities of TiN-containing precipitates in the following manner. First, a cylindrical test specimen was cut out from each steel plate. The test specimen was cut out so that the axial direction of the test specimen agree with the transverse direction of the steel plate; that the distance between the central axis of the test specimen and one surface of the steel plate be one-fourth the average thickness of the steel plate; and that one bottom of the test specimen be a longitudinal section of the steel plate. Next, a replica TEM test specimen was prepared from the bottom of the above-prepared test specimen corresponding to the longitudinal section of the steel plate, and this was observed with a transmission electron microscope (TEM). The observation was performed at 15000-fold magnification in four observation view fields each having an area of 52.7 $\mu m^2$. In the observation, titanium-containing precipitates were identified using an energy-dispersive X-ray (fluorescence) analyzer (EDX), and the precipitates were defined as TiN-containing precipitates. Next, the areas of the TiN-containing precipitates in the observation view field were measured by image analysis and converted into equivalent circle diameters. The number of TiN-containing precipitates having an equivalent circle diameter of greater than 20 nm to smaller than 60 nm, and the number of TiN-containing precipitates having an equivalent circle diameter of 60 nm or more were counted, converted into numbers per square millimeter, and these were defined each as the "sectional number density". Particles having an equivalent circle diameter of 20 nm or less offer insufficient reliability in EDX and were excluded from the analysis. Measurement results are collectively given in Table 2.

Steel Plate Evaluations

The yield strength, HIC resistance, and SSCC resistance in the T-shaped cross welded portion of each steel plate were evaluated by methods below. Evaluation results are collectively given in Table 2.

Yield Strength

A rod-like test specimen No. 4 prescribed in Japanese Industrial Standard (JIS) Z 2241:2011 was cut out from each steel plate. The test specimen was cut out so that the axial direction of the test specimen agree with the transverse direction of the steel plate; and that the distance between the central axis of the test specimen and one surface of the steel plate be one-fourth the average thickness of the steel plate. Next, the test specimen was subjected to a tensile test by the method described in JIS Z 2241:2011 to measure the yield strength (in MPa). A higher yield strength indicates higher strength. A sample having a yield strength of 470 MPa or more can be evaluated as "good"; and a sample having a yield strength of less than 470 MPa can be evaluated as "not good".

HIC Resistance

HIC resistance was examined and evaluated according to the method described in "National Association of Corrosion Engineers (NACE) Standard TM0284-2003. Specifically, a plate-like test specimen having a thickness of 10 mm, a width of 20 mm, and a length of 100 mm was cut out from each steel plate so that the longitudinal direction of the test specimen agree with the rolling direction of the steel plate. Next, the test specimen was immersed in an aqueous solution at 25°C for 96 hours. The aqueous solution contained 5 mass percent of NaCl and 0.5 mass percent of $CH_3COOH$ and was saturated with hydrogen sulfide at 1 atmospheric pressure. The test specimen after immersion was cut at a 10 mm pitch in the longitudinal direction to give cut sections. All the cut sections were polished and observed with an optical microscope at 100-fold magnification. A sample suffering from a crack having a length of 1 mm or more was determined as suffering from HIC. Table 2 presents the presence or absence of HIC in all the cut sections. A sample without HIC can be evaluated as having "good" HIC resistance; and a sample with HIC can be evaluated as having "not good" HIC resistance.

SSCC Resistance in T-Shaped Cross Welded Portion

The SSCC resistance in the T-shaped cross welded portion was examined and evaluated in the following manner. First, each steel plate was processed to have an X-groove at 75°, welded by two passes of submerged arc welding, and yielded pipes. The welding was performed at a heat input of 3.7 kJ/mm for the first pass, and at a heat input of 5.4 kJ/mm for the second pass. This process was a simulation of seam welding. Next, the pipes were welded by one pass of bead-on-plate welding via gas-shielded arc welding so that the welding direction was in perpendicular to the seam weld line of the pipes, and yielded a bonded pipe assembly. The welding was performed at a heat input of 1.0 kJ/mm. This process was a simulation of girth welding to bond the pipes with each other.
The weld surface in the bonded pipe assembly after welding was subjected to grinder treatment (grinding) to remove weld reinforcement of the bead welding. From the bonded pipe assembly directly below the bead weld, a test specimen having a length of 115 mm, a width of 15 mm, and a thickness of 5 mm was sampled so that the central axis of the test specimen be in parallel with the bead weld lire. This test specimen was subjected to a SSCC resistance evaluation test as a four-point bending test according to "ASTM G39, NACE TM0177-2005 Method B". Specifically, distortion (bending) corresponding to a load stress of 388 MPa or 438 MPa was applied to the test specimen. The test specimen was then immersed in a NACE solution A for 720 hours, and whether cracking, namely, SSCC, occurred in the test specimen surface was observed with an optical microscope at 10-fold magnification. The NACE solution A contained 5 mass percent of NaCl and 0.5 mass percent of $CH_3COOH$ and was saturated with hydrogen sulfide at 1 atmospheric pressure. A sample, when suffering from SSCC at a load stress of 388 MPa, was not subjected to the SSCC resistance evaluation test at a load stress of 438 MPa. Table 2 presents the presence or absence of SSCC at a load stress of 388 MPa and 438 MPa. For the SSCC resistance in the T-shaped cross welded portion, a sample not suffering from SSCC both at a load stress of 388 MPa and 438 MPa can be evaluated as having "very good" SSCC resistance; a sample suffering from SSCC at a load stress of 438 MPa, but not suffering from SSCC at a load stress of 388 MPa can be evaluated as having "good" SSCC resistance; and a sample suffering from SSCC at a load stress of 388 MPa can be evaluated as having "not good" SSCC resistance.

[Table 2]

| Number | Category | Production Conditions | | | | | TiN-containing precipitates | | Evaluations | | | |
|---|---|---|---|---|---|---|---|---|---|---|---|---|
| | | t1 (sec) | t2 (hr) | Rolling reduction | Rolling pass number | Finish rolling temperature (°C) | greater than 20 nm to less than 60 nm (number/mm²) | 60 nm or more (number/mm²) | Yield strength (MPa) | HIC | SSCC in T-shaped cross welded portion | |
| | | | | | | | | | | | 388 MPa | 438 MPa |
| 1 | Example | 270 | 3.0 | 0.53 | 10 | 920 | 7.4×10⁵ | 2.5×10⁵ | 512 | abs. | abs. | pres. |
| 2 | Example | 270 | 3.0 | 0.70 | 11 | 800 | 7.1×10⁵ | 2.2×10⁵ | 488 | abs. | abs. | abs. |
| 3 | Example | 260 | 3.0 | 0.55 | 11 | 820 | 8.4×10⁵ | 3.1×10⁵ | 562 | abs. | abs. | abs. |
| 4 | Example | 260 | 3.0 | 0.83 | 14 | 880 | 6.5×10⁵ | 2.6×10⁵ | 533 | abs. | abs. | abs. |
| 5 | Example | 270 | 3.0 | 0.67 | 11 | 820 | 6.3×10⁵ | 2.2×10⁵ | 528 | abs. | abs. | abs. |
| 6 | Example | 220 | 3.0 | 0.83 | 14 | 880 | 6.5×10⁵ | 2.4×10⁵ | 540 | abs. | abs. | abs. |
| 7 | Example | 270 | 3.0 | 0.67 | 11 | 820 | 6.7×10⁵ | 2.4×10⁵ | 552 | abs. | abs. | abs. |
| 8 | Example | 270 | 3.5 | 0.83 | 14 | 880 | 7.7×10⁵ | 2.8×10⁵ | 546 | abs. | abs. | abs. |
| 9 | Example | 280 | 3.0 | 0.83 | 14 | 880 | 4.8×10⁵ | 2.1×10⁵ | 568 | abs. | abs. | abs. |
| 10 | Example | 290 | 3.0 | 0.67 | 11 | 820 | 7.8×10⁵ | 2.8×10⁵ | 533 | abs. | abs. | abs. |
| 11 | Example | 280 | 3.0 | 0.83 | 14 | 850 | 3.2×10⁵ | 1.1×10⁵ | 515 | abs. | abs. | abs. |
| 12 | Comparative Example | 270 | 3.0 | 0.67 | 14 | 820 | 5.2×10⁴ | 9.5×10³ | 541 | abs. | pres. | - |
| 13 | Comparative Example | 270 | 3.0 | 0.67 | 14 | 820 | 8.7×10⁵ | 2.2×10⁵ | 522 | abs. | pres. | - |
| 14 | Comparative Example | 280 | 4.5 | 1.00 | 17 | 880 | 2.4×10⁵ | 3.4×10⁵ | 522 | abs. | pres. | - |
| 15 | Comparative Example | 270 | 3.0 | 0.33 | 10 | 880 | 2.6×10⁵ | 2.7×10⁵ | 513 | abs. | pres. | - |
| 16 | Comparative Example | 310 | 3.0 | 0.83 | 14 | 820 | 3.4×10⁵ | 5.7×10⁴ | 516 | abs. | pres. | - |
| 17 | Comparative Example | 270 | 3.0 | 0.67 | 6 | 780 | 9.0×10⁵ | 2.4×10⁵ | 455 | pres. | pres. | - |
| 18 | Comparative Example | 260 | 3.0 | 0.67 | 11 | 820 | 7.2×10⁵ | 2.4×10⁵ | 603 | pres. | pres. | - |
| 19 | Comparative Example | 260 | 3.0 | 0.67 | 14 | 820 | 1.0×10⁵ | 2.0×10⁵ | 551 | abs. | pres. | - |

As apparent from Table 2, the steel plates of No. 1 to No. 11 according to the examples had yield strength, HIC resistance, and SSCC resistance in the T-shaped cross welded portion all at good levels. This supports the determination that the steel plates are advantageously usable as steel materials for energy production/transportation and, in particular, as steel plates for line pipes, which are materials for line pipes for use in transportation of petroleum and natural gas.

Among them, the steel plates of No. 2 to No. 11 had a value of$[C]\times[Nb]\times10^5$ of 200 or less and, in particular, had better SSCC resistance in the T-shaped welded portion as compared with the steel plate of No.1 having a value of $[C]\times[Nb]\times10^5$ of greater than 200. This supports the determination that steel plates can have still better SSCC resistance in the T-shaped cross welded portion by controlling the value of $[C]\times[Nb]\times10^5$ to be 200 or less.

In contrast, the steel plates of No. 12 to No. 19 according to the comparative examples were not good in at least the SSCC resistance in the T-shaped cross welded portion, out of the yield strength, the HIC resistance, and the SSCC resistance in the T-shaped cross welded portion. The comparative examples will be analyzed below.

The steel plates of Nos.12, 13, 17, and 19 are comparative examples that do not meet the conditions specified in the present invention on the chemical composition and the sectional number densities of TiN-containing precipitates. The steel plates of Nos.14 to 16 are comparative examples that do not meet the conditions specified in the present invention on the sectional number densities of TiN-containing precipitates. The steel plate of No. 18 is a comparative example that does not meet the condition specified in the present invention on the chemical composition. The steel plates not meeting the condition(s) specified in the present invention on at least one of the chemical composition and the sectional number densities of TiN-containing precipitates were not good in at least the SSCC resistance in the T-shaped welded portion. The steel plates of Nos.17 and 18 were also not good in the HIC resistance.

The steel plates according to the embodiments of the present invention have excellent HIC resistance and excellent SSCC resistance in the T-shaped cross welded portion.

## Claims

1. A steel plate comprising, in chemical composition:

   C in a content of 0.008 mass percent to 0.08 mass percent;
   Si in a content of 0.02 mass percent to 0.50 mass percent;
   Mn in a content of 0.6 mass percent to 2.0 mass percent;
   P in a content of greater than 0 mass percent to 0.014 mass percent;
   S in a content of greater than 0 mass percent to 0.004 mass percent;
   Al in a content of 0.010 mass percent to 0.050 mass percent;
   Nb in a content of 0.002 mass percent to 0.035 mass percent;
   at least one rare-earth metal in a content of 0.0002 mass percent to 0.0070 mass percent;
   Zr in a content of 0.0003 mass percent to 0.01 mass percent;
   Ca in a content of 0.0003 mass percent to 0.004 mass percent;
   Ti in a content of 0.002 mass percent to 0.012 mass percent;
   N in a content of greater than 0 mass percent to 0.0065 mass percent; and
   O in a content of greater than 0 mass percent to 0.004 mass percent,
   with the remainder being Fe and inevitable impurities,
   the steel plate comprising TiN-containing precipitates having an equivalent circle diameter of greater than 20 nm to smaller than 60 nm in a sectional number density of $3.0\times10^5$ per square millimeter to $8.5\times10^5$ per square millimeter,
   the steel plate comprising TiN-containing precipitates having an equivalent circle diameter of 60 nm or more in a sectional number density of $1.0\times10^5$ per square millimeter or more.

2. The steel plate according to claim 1,
   wherein the steel plate meets a condition specified by Expression (1):

$$[C]\times[Nb]\times10^5\leq200 \qquad (1)$$

   wherein [C] and [Nb] are contents (in mass percent) respectively of C and Nb based on the total mass of the steel plate.

3. The steel plate according to one of claims 1 and 2,
   further comprising at least one element selected from the group consisting of Ni in a content of 0.01 mass percent to 1.50 mass percent;
Cu in a content of 0.01 mass percent to 1.50 mass percent;
Cr in a content of 0.01 mass percent to 1.50 mass percent;
Mo in a content of 0.01 mass percent to 1.50 mass percent;
V in a content of 0.003 mass percent to 0.08 mass percent;
B in a content of 0.0002 mass percent to 0.0025 mass percent; and
Mg in a content of greater than 0 mass percent to 0.005 mass percent.

4. A bonded assembly comprising:

the steel plate according to claim 1; and
a weld metal that joins two ends of the steel plate according to claim 1 with each other, or
the bonded assembly comprising:

the steel plate acoording to claim 1;
another steel plate; and
a weld metal that joins the steel plate according to claim 1 and the other steel plate with each other.

5. A bonded assembly comprising:

the steel plate according to claim 2; and
a weld metal that joins two ends of the steel plate according to claim 2 with each other, or
the bonded assembly comprising:

the steel plate according to claim 2;
another steel plate; and
a weld metal that joins the steel plate according to claim 2 and the other steel plate with each other.

6. A bonded assembly comprising:

the steel plate according to claim 3; and
a weld metal that joins two ends of the steel plate according to claim 3 with each other, or
the bonded assembly comprising:

the steel plate according to claim 3;
another steel plate; and
a weld metal that joins the steel plate according to claim 3 and the other steel plate with each other.

7. The bonded assembly according to any of claims 4 to 6,
wherein TiN-containing precipitates in a heat affected zone are present in a sectional number density that gradually increases toward a direction away from a fusion line.

# EP 3 159 418 A1

Europäisches
Patentamt

European
Patent Office

Office européen
des brevets

## EUROPEAN SEARCH REPORT

Application Number

EP 16 00 2207

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 832 879 A1 (NIPPON STEEL & SUMITOMO METAL CORP [JP]) 4 February 2015 (2015-02-04) * claims 1-2 * * tables 1A-C, 2B * | 1-7 | INV. C21D8/02 C22C38/00 C22C38/02 C22C38/04 C22C38/06 |
| X | EP 1 025 272 A1 (EXXONMOBIL UPSTREAM RES CO [US]; NIPPON STEEL CORP [JP]) 9 August 2000 (2000-08-09) * paragraph [0030]; claims 1-17; tables 1, 2 * | 1-7 | C22C38/08 C22C38/12 C22C38/14 C22C38/16 C22C38/20 C22C38/22 |
| X | JP 2008 056962 A (JFE STEEL KK) 13 March 2008 (2008-03-13) * paragraphs [0042], [0053], [0057]; claims 1-5 * * tables 1, 2 * | 1-7 | C22C38/24 C22C38/26 C22C38/28 C22C38/32 C22C38/40 C22C38/42 |
| X | EP 2 434 027 A1 (JFE STEEL CORP [JP]) 28 March 2012 (2012-03-28) * paragraphs [0001], [0046]; claims 1-4; tables 1-1, 1-2 * | 1-7 | |
| | | | TECHNICAL FIELDS SEARCHED (IPC) |
| A | JP 2013 057125 A (JFE STEEL CORP) 28 March 2013 (2013-03-28) * the whole document * | 1-7 | C22C C21D |
| A | JP 2013 023713 A (JFE STEEL CORP) 4 February 2013 (2013-02-04) * the whole document * | 1-7 | |
| A | KR 2010 0044106 A (KOBE STEEL LTD [JP]) 29 April 2010 (2010-04-29) * the whole document * | 1-7 | |
| A | EP 2 899 289 A1 (KOBE STEEL LTD [JP]) 29 July 2015 (2015-07-29) * the whole document * | 1-7 | |

The present search report has been drawn up for all claims

| Place of search | Date of completion of the search | Examiner |
|---|---|---|
| The Hague | 6 February 2017 | Pircher, Ernst |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 16 00 2207

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | | | C22C38/44<br>C22C38/48<br>C22C38/50<br>C22C38/58 |
| | | | TECHNICAL FIELDS SEARCHED (IPC) |

The present search report has been drawn up for all claims

| Place of search | Date of completion of the search | Examiner |
|---|---|---|
| The Hague | 6 February 2017 | Pircher, Ernst |

EPO FORM 1503 03.82 (P04C01)

## EP 3 159 418 A1

### ANNEX TO THE EUROPEAN SEARCH REPORT
### ON EUROPEAN PATENT APPLICATION NO.

EP 16 00 2207

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2017

| Patent document cited in search report | | Publication date | Patent family member(s) | | Publication date |
|---|---|---|---|---|---|
| EP 2832879 | A1 | 04-02-2015 | CN | 104024461 A | 03-09-2014 |
| | | | EP | 2832879 A1 | 04-02-2015 |
| | | | JP | 5392441 B1 | 22-01-2014 |
| | | | JP | WO2013147197 A1 | 14-12-2015 |
| | | | KR | 20140116913 A | 06-10-2014 |
| | | | WO | 2013147197 A1 | 03-10-2013 |
| EP 1025272 | A1 | 09-08-2000 | AT | 330040 T | 15-07-2006 |
| | | | AU | 736035 B2 | 26-07-2001 |
| | | | BR | 9811051 A | 15-08-2000 |
| | | | CA | 2295582 A1 | 04-02-1999 |
| | | | CN | 1265709 A | 06-09-2000 |
| | | | CN | 1390960 A | 15-01-2003 |
| | | | DE | 69834932 T2 | 25-01-2007 |
| | | | EP | 1025272 A1 | 09-08-2000 |
| | | | ES | 2264572 T3 | 01-01-2007 |
| | | | JP | 4294854 B2 | 15-07-2009 |
| | | | JP | 2001511482 A | 14-08-2001 |
| | | | KR | 100375086 B1 | 28-03-2003 |
| | | | RU | 2218443 C2 | 10-12-2003 |
| | | | US | 6264760 B1 | 24-07-2001 |
| | | | WO | 9905335 A1 | 04-02-1999 |
| JP 2008056962 | A | 13-03-2008 | JP | 5098256 B2 | 12-12-2012 |
| | | | JP | 2008056962 A | 13-03-2008 |
| EP 2434027 | A1 | 28-03-2012 | CN | 102428198 A | 25-04-2012 |
| | | | CN | 104087829 A | 08-10-2014 |
| | | | DK | 2434027 T3 | 07-12-2015 |
| | | | EP | 2434027 A1 | 28-03-2012 |
| | | | JP | 5604842 B2 | 15-10-2014 |
| | | | JP | 2011006772 A | 13-01-2011 |
| | | | KR | 20120010260 A | 02-02-2012 |
| | | | TW | 201041683 A | 01-12-2010 |
| | | | WO | 2010134220 A1 | 25-11-2010 |
| JP 2013057125 | A | 28-03-2013 | JP | 5505487 B2 | 28-05-2014 |
| | | | JP | 2013057125 A | 28-03-2013 |
| JP 2013023713 | A | 04-02-2013 | JP | 5853456 B2 | 09-02-2016 |
| | | | JP | 2013023713 A | 04-02-2013 |
| KR 20100044106 | A | 29-04-2010 | CN | 101724780 A | 09-06-2010 |
| | | | CN | 102321842 A | 18-01-2012 |
| | | | KR | 20100044106 A | 29-04-2010 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 16 00 2207

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2017

| Patent document cited in search report | | Publication date | Patent family member(s) | | Publication date |
|---|---|---|---|---|---|
| EP 2899289 | A1 | 29-07-2015 | CN | 104603314 A | 06-05-2015 |
| | | | EP | 2899289 A1 | 29-07-2015 |
| | | | JP | 5883369 B2 | 15-03-2016 |
| | | | JP | 2014058734 A | 03-04-2014 |
| | | | KR | 20150038664 A | 08-04-2015 |
| | | | WO | 2014045829 A1 | 27-03-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO611986165207 A
- JP HEI01198996329 A
- JP 2005186162 A
- JP 2011021263 A